# EUROPEAN PATENT APPLICATION

(11) **EP 2 980 967 A1**
(43) Date of publication of application: **03.02.2016**
(21) Application number: 14775163.0
(22) Date of filing: 20.03.2014
(51) Int. Cl.: H02K 7/116, B60S 1/08

(54) **ELECTRIC MOTOR AND MOTOR FOR WIPER**

(30) Priority: 25.03.2013 JP 2013061289
(71) Applicant: MITSUBA Corporation, Kiryu-shi Gunma 376-8555 (JP)
(72) Inventor: KAWASHIMA Yoshichika, Kiryu-shi Gunma 376-8555 (JP); TOKIZAKI Teppei, Kiryu-shi Gunma 376-8555 (JP); TAMURA Natsumi, Kiryu-shi Gunma 376-8555 (JP)
(74) Representative: Cabinet Laurent & Charras
(86) International application number: PCT/JP2014/057668
(87) International publication number: WO 2014/156920

(57) **Abstract**

An electric motor (2) includes a yoke (5) having a cylindrical magnet housing section (54) that houses a magnet (7), and a gear housing (23) having a cylindrical frame section (22) that houses at least a brush holder. One side of the yoke (5) is joined to the other side of the frame section (22), and a rotary shaft is housed in the magnet housing section (54) and the frame section (22) in an axial direction of the magnet housing section (54) and the frame section (22). A first axial length (F) is formed to be equal to or longer than a second axial length (Y), the first axial length (F) is an axial length of an outer wall of the frame section (22) that is formed substantially parallel to the rotary shaft, and the second axial length (Y) is an axial length of an outer wall of the magnet housing section (54) that is formed substantially parallel to the rotary shaft.

## Description

### [Technical Field]

The present invention relates to an electric motor and a wiper motor. Priority is claimed on Japanese Patent Application No. 2013-061289, filed March 25, 2013, the content of which is incorporated herein by reference.

### [Background Art]

In recent years, motor devices that drive a power transmission member such as a link mechanism to obtain a large torque by decelerating a rotary motion of a motor main body having a drive shaft or perform a swinging motion of a driving target have become known.

Among the various motor devices, there is a wiper motor that drives a driving target by converting the rotary motion of the motor body into the swinging motion. The wiper motor is configured to perform the swinging motion of the wiper arm having a pipe blade mounted thereon on a windshield glass or a rear window glass within a predetermined range to wipe dust and raindrops adhering to the windshield glass or the rear window glass of a vehicle such as an automobile.

As an electric motor used as such a wiper motor, for example, there is a configuration disclosed in Patent Literature 1. The electric motor (wiper motor) disclosed in Patent Literature 1 has a yoke in which a magnet is provided on an inner surface side and an armature core is housed inside, and a gear housing which houses a deceleration mechanism, and a brush holder is housed thereinside.

In such an electric motor, since part of the brush holder is housed in the yoke, different yoke diameters are formed in a part that forms a magnetic circuit in the yoke and in a part that houses the brush holder, due to a difference in sizes (outer diameters) of the armature core and the brush holder. That is, the gear housing side of the yoke is formed in a stepped shape so that the diameter of the gear housing side as the housing part of the brush holder in the yoke is greater than that of the part that houses the armature core (the part provided with the magnet).

Moreover, since part of the brush holder is housed in the yoke, the entire yoke becomes longer, and thus, an axial length of the yoke becomes longer, even compared to a frame section serving as the part that houses the brush holder on the gear housing side.

### [Citation List]

### [Patent Literature]

### [Patent Literature 1]

Japanese Unexamined Patent Application, First Publication No. 2011-223656

### [Summary of Invention]

### [Technical Problem]

Incidentally, the yoke is necessary to form a magnetic circuit. Since the yoke is formed mainly of iron, it is heavier than the frame section of the gear housing formed of a material with a specific gravity such as aluminum. Therefore, the yoke greatly influences the total weight of the motor.

However, in the electric motor, the yoke section is provided with a part that houses the brush holder as described above, thereby forming a stepped shape. Therefore, a material (mainly iron) of the yoke having a high specific gravity is used much to impair the reduction in size and weight of the entire electric motor.

However, in the electric motor, such as a wiper motor, mounted on a vehicle, the reduction in size and weight is always required from the demand for an improvement in vehicle mountability. Therefore, the reduction in size and weight of the electric motor is also required.

The present invention provides an electric motor and a wiper motor that allow reduction in size and weight.

### [Solution to Problem]

In order to achieve the aforementioned objects, according to a first aspect of the present invention, there is provided an electric motor that includes: a yoke having a cylindrical magnet housing section that houses a magnet, and a gear housing having a cylindrical frame section that houses at least a brush holder, wherein one side of the yoke is joined to the other side of the frame section, a rotary shaft is housed in the magnet housing section and the frame section in an axial direction of the magnet housing section and the frame section, a first axial length is formed to be equal to or longer than a second axial length, the first axial length is an axial length of an outer wall of the frame section that is formed substantially parallel to the rotary shaft, and the second axial length is an axial length of an outer wall of the magnet housing section that is formed substantially parallel to the rotary shaft.

According to the electric motor, the first axial length is formed to be equal to or longer than the second axial length, the first axial length is an axial length of an outer wall of the frame section that is formed substantially parallel to the rotary shaft, and the second axial length is an axial length of an outer wall of the magnet housing section that is formed substantially parallel to the rotary shaft. Therefore, the brush holder is housed in the relatively long frame section, and thus, it is possible to eliminate a stepped shape due to the housing part of the brush holder from the yoke including the magnet housing section. Also, by housing the brush holder in the frame section, it is possible to shorten the length of the yoke including the magnet housing section. Therefore, by shortening the length of the yoke made of the material having a high specific gravity, and by eliminating a stepped shape for the brush holder from the yoke, it is possible to reduce the size and weight of the electric motor.

Also, in the electric motor, the magnet housing section may be formed so that a first yoke plate thickness is thinner than a second yoke plate thickness, the first yoke plate thickness is a plate thickness of a magnet fixing section to which the magnet is fixed, and the second yoke plate thickness is a plate thickness of a part located between the magnet fixing section in a circumferential direction of the magnet housing section.

When the yoke becomes shorter, a magnetic circuit volume decreases. Therefore, in particular, by increasing the thickness of the second yoke plate thickness between the magnet fixing section, it is possible to compensate for the reduction of the magnetic circuit volume. Furthermore, by adopting an uneven thickness structure in which the first yoke plate thickness of the magnet fixing section is thinner than the second yoke plate thickness without increasing the entire plate thickness at that time, it is possible to achieve a weight reduction of the yoke, without impairing the magnetic properties.

Also, the electric motor may further include an armature core that is attached to the rotary shaft and has a plurality of teeth radially extending in a radial direction, and the armature core may be formed by winding the windings around each of the plurality of teeth in a concentrated winding manner.

Since the armature core is formed by winding the windings in a concentrated winding manner, it is possible to shorten the axial length of the armature core, for example, compared to a conventional armature core in which the windings are wound in an overlapping winding manner. Therefore, it is possible to further shorten the length of the yoke including the magnet housing section and to reduce the size and weight of the electric motor.

According to a second aspect of the present invention, there is provided a wiper motor including the electric motor.

Because the wiper motor includes the electric motor, reduction in size and weight can be achieved. Therefore, it is possible to improve vehicle mountability.

### [Advantageous Effects of Invention]

According to the electric motor, by housing the brush holder in the frame section, it is possible to eliminate a stepped shape due to the housing part of the brush holder from the yoke including the magnet housing section. Also, by housing the brush holder in the frame section, it is possible to shorten the length of the yoke including the magnet housing section. Therefore, by shortening the length of the yoke made of a material having a high specific gravity, and by eliminating a stepped shape for the brush holder from the yoke, it is possible to reduce the size and weight of the electric motor.

### [Brief Description of Drawings]

Fig. 1A is a perspective view representing a wiper motor to which an electric motor according to an embodiment of the present invention is applied.
Fig. 1B is a side view representing a wiper motor to which an electric motor according to an embodiment of the present invention is applied.
Fig. 2 is a longitudinal sectional view of a wiper motor illustrated in Figs. 1A and 1B.
Fig. 3 is a plan view in which the interior of the yoke of the electric motor according to an embodiment of the present invention is viewed from the axial direction.
Fig. 4 is a perspective view representing a brush holder housed in the frame section.

### [Description of Embodiments]

Hereinafter, an electric motor and a wiper motor of the present invention will be described in detail with reference to the drawings. In the following drawings, in order to represent each member at a recognizable size, the scales of each member are appropriately changed.

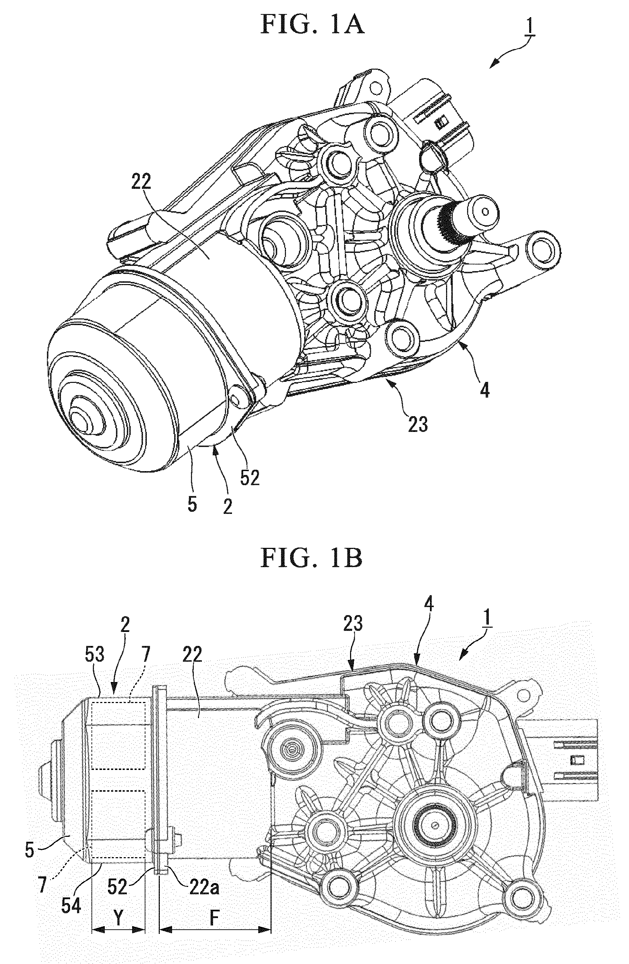

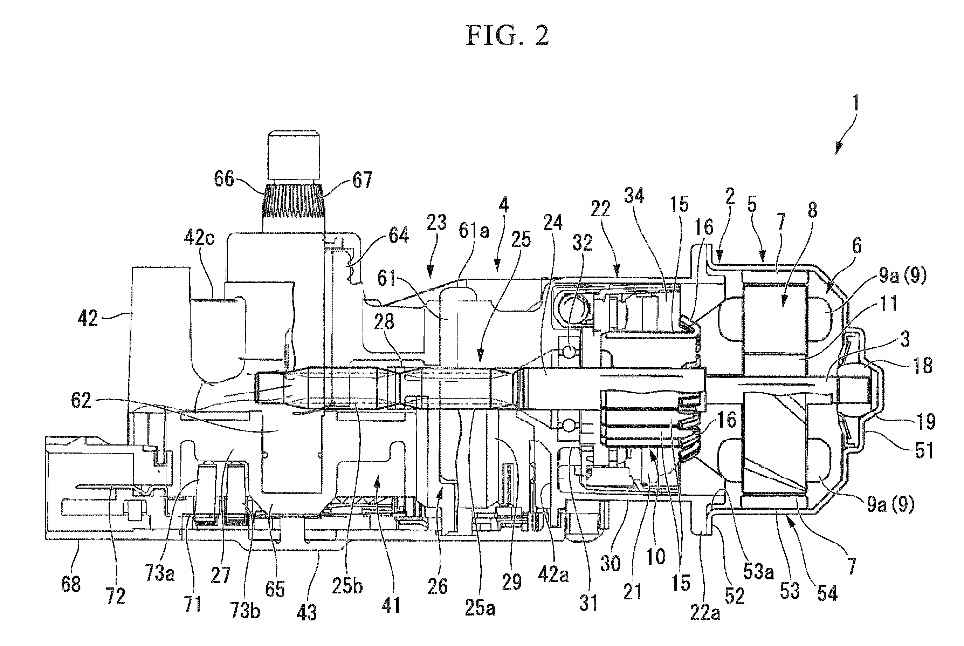

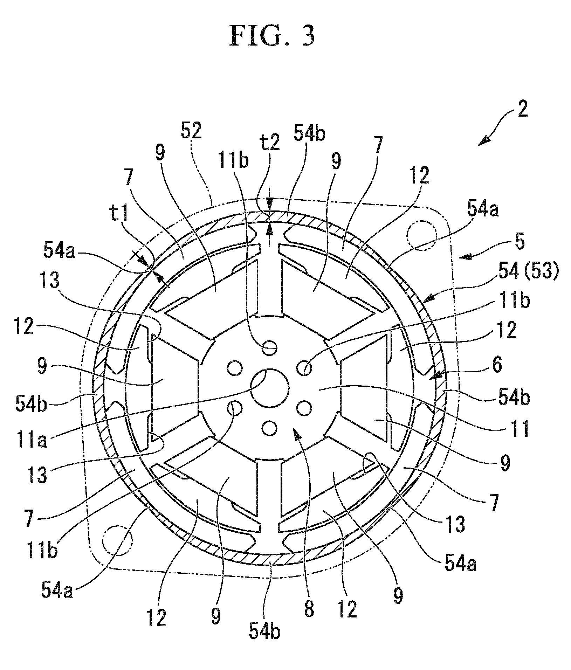

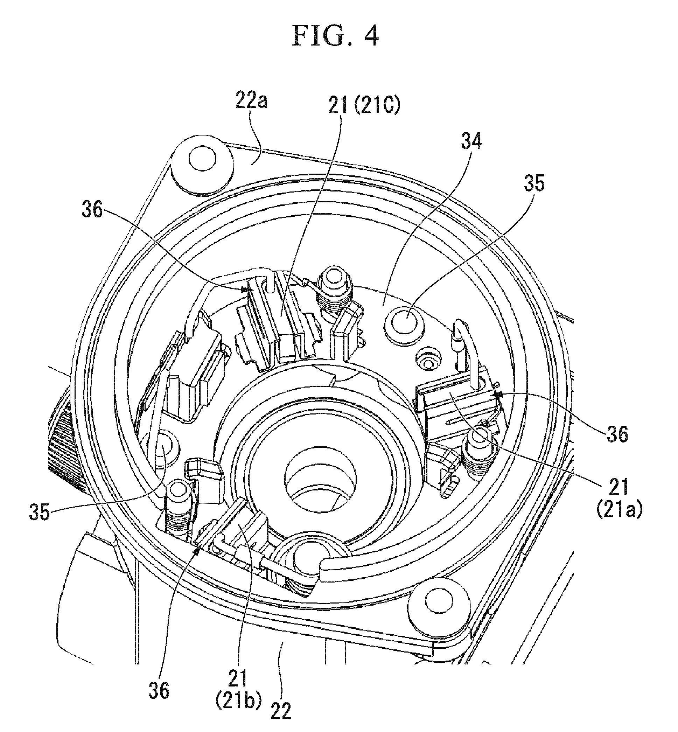

Figs. 1A and 1B are diagrams illustrating a wiper motor to which an electric motor according to an embodiment of the present invention is applied, Fig. 1A is a perspective view, and Fig. 1B is a side view. Fig. 2 is a longitudinal sectional view of the wiper motor, Fig. 3 is a plan view in which the yoke is viewed in the axial direction, and Fig. 4 is a perspective view illustrating a brush holder housed in the frame section.

As illustrated in Figs. 1A, 1B and 2, a wiper motor 1, for example, is used to drive a wiper of a motor vehicle. The wiper motor 1 includes a motor section 2 and a deceleration mechanism 4 coupled to a rotary shaft 3 of the motor section 2. The motor section 2 includes a bottomed cylindrical yoke 5, and an armature 6 that is rotatably provided in the yoke 5 as illustrated in Fig. 2.

The yoke 5 is formed of a material with a relatively high specific gravity consisting mainly of iron. A cylindrical section 53 of the yoke 5 is formed in a substantially cylindrical shape. Four segmented permanent magnets (magnets) 7 are disposed on the inner circumferential surface of the cylindrical section 53. Locations at which the permanent magnets 7 are arranged and housed are a magnet housing section 54 in this embodiment. That is, as illustrated in Fig. 1B, the range of arrangement of the permanent magnet 7 in the axial direction of the cylindrical section 53 is the magnet housing section 54. An axial length of the outer wall of the magnet housing section 54 formed substantially parallel to the rotary shaft 3, i.e., the length of the range is set to a second axial length Y in this embodiment.

As illustrated in Fig. 3 that is a plan view in which the yoke 5 is viewed from the deceleration mechanism 4 side, the magnet housing section 54 of the yoke 5 is formed so that a first yoke plate thickness t1 is thinner than a second yoke plate thickness t2. The first yoke plate thickness t1 is the plate thickness of the magnet fixing section 54a to which the permanent magnet 7 is fixed, and the second yoke plate thickness t2 is the plate thickness of a part 54b located between the magnet fixing sections 54a and 54a in the circumferential direction of the magnet housing section 54.

Specifically, the magnet housing section 54 (cylindrical section 53) of the yoke 5 is formed so that its plate thickness is maximum at a location corresponding to the center between the permanent magnets 7 adjacent to each other, that is, at a location that does not contact the permanent magnets 7. Also, the magnet housing section 54 is formed so that the plate thickness becomes gradually smaller toward the location at which its plate thickness becomes maximum, and the plate thickness becomes minimum at a location corresponding to a circumferential center of the permanent magnet 7, that is, at an intermediate position in the circumferential line of the outer circumferential surface of the permanent magnet 7. For example, when the plate thickness of a portion having the thinnest plate thickness (thinnest portion) is set to 1, the plate thickness of a portion having the thickest plate thickness (thickest portion) is set to about 1.3 to 1.5. By having such an uneven thickness structure, it is possible to shorten the axial length of the yoke 5, without impairing the magnetic properties as will be described below.

That is, when simply shortening the yoke 5, since a magnetic circuit volume of the yoke 5 also decreases, there is concern of magnetic saturation in the yoke 5. Therefore, by adopting the above-mentioned uneven thickness structure and particularly by increasing the second yoke plate thickness t2 between the magnet fixing sections 54a and 54a, it is possible to compensate for the reduction of the magnetic circuit volume. By simply making the second yoke plate thickness t2 slightly thicker than before, and by making the first yoke plate thickness t1 of the magnet fixing section 54a thinner than the second yoke plate thickness t2 without significantly increasing the total thickness than before, it is possible to reduce the weight of the yoke 5 without impairing the magnetic properties. Moreover, since the second yoke plate thickness t2 is made slightly thicker than before, the first yoke plate thickness t1 can also be made slightly thinner than before.

As illustrated in Fig. 2, a bearing housing 19 protruding outward in the axially direction is formed in the radial center of a bottom wall (end portion) 51 of the yoke 5. A sliding bearing 18 for pivotally supporting one end of the rotary shaft 3 in a freely rotatable manner is provided in the bearing housing 19. The sliding bearing 18 has an alignment function of the rotary shaft 3. The rotary shaft 3 is housed and disposed in the cylindrical section 53 (the magnet housing section 54) and a frame section 22 to be described below in the axial direction of the cylindrical section 53 and the frame section 22.

An outer flange section 52 is provided in an opening 53a of the cylindrical section 53, i.e., on one side of the yoke 5. A bolt hole (not illustrated) is formed in the outer flange section 52. When the bolt (not illustrated) is inserted into the bolt and is screwed to a bolt hole (not illustrated) of the flange section 22a (the other side of the frame section 22) of a frame section 22 formed in a gear housing 23 (which will be described below) of the deceleration mechanism 4, the yoke 5 is fastened and fixed to the deceleration mechanism 4.

Here, a stepped shape like the related art is not formed on the opening 53a side of the cylindrical section 53, and a portion between the magnet housing section 54 and the outer flange section 52 has a substantially cylindrical shape having a substantially uniform outer diameter.

As illustrated in Figs. 2 and 3, the armature 6 includes an armature core 8 that is externally fitted and fixed to the rotary shaft 3, an armature coil 9 that is wound around the armature core 8, and a commutator 10 that is disposed on the other end side of the rotary shaft 3. The armature core 8 is formed, by laminating a plate material of a magnetic material punched by a press working or the like (laminated core), or by pressing and molding soft magnetic powders (dust core). The armature core 8 has a substantially cylindrical core body 11.

As illustrated in Fig. 3, a through-hole 11 a for press-fitting the rotary shaft 3 is formed in the substantially radial center of the core body 11. Also, six teeth 12 having a substantially T-shape when viewed in the axial plane are radially provided on the outer circumferential portion of the core body 11. By radially providing the teeth 12 on the outer circumferential portion of the core body 11, six dovetail-shaped slots 13 are formed between the adjacent teeth 12.

The winding (not illustrated) is wound around the armature core 8 via the slots 13 to form the armature coil 9. The armature coil 9 is formed by winding the windings in a concentrated winding manner in this embodiment. By winding the windings in the concentrated winding manner in this way, for example, it is possible to shorten the axial length of the armature core 8, as compared to a conventional armature core in which the windings are wound in an overlapping manner.

That is, by winding windings around each teeth 12 in a concentrated winding manner, there is no jumper wire of the armature coil 9 extending between the adjacent teeth 12. Therefore, as illustrated in Fig. 2, the overlap of a coil end 9a of the armature coil 9 present in the axial end portion of the armature core 8 decreases as compared to the case of forming the armature coil 9 in the overlapping winding manner. Therefore, in this embodiment, the length of the cylindrical section 53 of the yoke 5 including the magnet housing section 54 is shortened as compared to the conventional armature core in which the armature coils are formed in the overlapping winding manner.

Here, as illustrated in Fig. 3, six air holes 11b having a circular cross section penetrating in the axial direction are circumferentially formed in the core body 11 at positions corresponding to the base of the teeth 12. More specifically, the air holes 11b are formed between the through-hole 11a and the teeth 12 of the core body 11, and slightly closer to the through-hole 11a than the substantially radial center between the through-hole 11a and the base of the teeth 12. The air holes 11b promote the convection of air in the interior of the motor section 2 to suppress the temperature rise of the motor section 2.

As illustrated in Fig. 2, the commutator 10 is externally fitted and fixed further on the other side of the rotary shaft 3 compared to the armature core 8. The commutator 10 is entirely housed inside the frame section 22 of the gear housing 23 of the deceleration mechanism 4. Eighteen segments 15 formed of a conductive material are attached to the outer circumferential surface of the commutator 10. The segments 15 are made up of plate-shaped metal pieces that are in the axial direction. The segments 15 are fixed in parallel at equal intervals in the circumferential direction while being insulated from each other.

Thus, the motor section 2 is a so-called four-pole six-slot eighteen-segment electric motor in which four permanent magnets 7 (the number of magnetic poles is four), six slots 13, and eighteen segment 15 are set.

Also, a riser 16 is integrally formed at the end portion of each segment 15 on the side of the armature core 8, and the riser 16 is bent in the form of being folded to the outer diameter side. A distal end portion of the armature coil 9 is wrapped around the riser 16 and is fixed by fusing or the like. As a result, the segments 15 and the armature coil 9 corresponding thereto are electrically conductive.

Furthermore, a connection line (not illustrated) is wound around the riser 16 corresponding to each of the segments 15 having the same potential, and the connection line is fixed to the riser 16 by fusing. The connection line is a member for short-circuiting the segments 15 having the same potential to each other, and is pulled around between the commutator 10 and the armature core 8.

The commutator 10 configured in this manner is housed in the frame section 22 of the gear housing 23 of the deceleration mechanism 4 as described above. The gear housing 23 has the frame section 22 and is configured to include a housing body 42 and a bottom plate 43 made of resin. The housing body 42 is formed in a substantially box shape having an opening 42a on one side to house a gear group 41 of the deceleration mechanism 4. The bottom plate 43 closes the opening 42a of the housing body 42.

The frame section 22 is disposed on the motor section 2 side of the housing body 42. The frame section 22 houses the commutator 10, and houses the brush holder 36 as illustrated in Fig. 4. The housing body 42 having the frame section 22 is an integrally formed member made of die-cast aluminum. However, as long as the frame section 22 (housing body 42) is made of a material lighter than the yoke 5, it is not limited to aluminum may be made of, for example, a resin.

As illustrated in Fig. 4, the frame section 22 is a substantially cylindrical member that is formed on the motor section 2 side of the gear housing 23, and a peripheral wall (outer wall) 30 of the frame section 22 is formed to have a substantially circular cross section. A holder stay 34 formed in a substantially annular shape is housed in the frame section 22. The holder stay 34 is fastened and fixed to the housing body 42 with a bolt 35.

Brush holders 36 are provided at three circumferential locations of the holder stay 34. The brush holders 36 are equipped brushes 21 that are urged via springs (not illustrated) in a freely projectable and retractable manner. The tip portions of the brushes 21 come into slide-contact with the segments 15 of the commutator 10 (see Fig. 2) since it is biased by the spring. Also, the brushes 21 are electrically connected to an external power source (not illustrated), for example, a battery mounted on an automobile. Thus, the commutator 10 is configured to be able to supply power from the external power source.

The brush 21 is configured to include a low-speed brush 21a and a high-speed brush 21b connected to an anode side and a common brush 21c connected to a cathode side that is commonly used with the low-speed brush 21a and the high-speed brush 21b. The low-speed brush 21a and the common brush 21c are disposed at an electrical angle of 180°, i.e., at 90° intervals from each other in the circumferential direction at a mechanical angle. On the other hand, the high-speed brush 21b is disposed apart from the low-speed brush 21a at a predetermined angle in the circumferential direction. In this embodiment, although the description has been given of a case in which the common brush 21c is the cathode side, and the low-speed brush 21a and the high-speed brush 21b are the anode side, the anode side and the cathode side may be reversed.

Here, as illustrated in Fig. 2, since the segments 15 having the same potential of the commutator 10, i.e., the segments 15 facing each other around the rotary shaft 3 are short-circuited by the connection line, it is also possible to supply power to the segments with which the brush 21 does not come into slide contact. Therefore, the high-speed brush 21b is present at a position that is advanced from the low-speed brush 21a by a predetermined angle.

As illustrated in Figs. 1A, 1B and 2, in the gear housing 23 that forms the deceleration mechanism 4, the substantially cylindrical frame section 22 that houses the brush holder 36 and the commutator 10 is formed in a substantially cylindrical shape by the peripheral wall (outer wall) 30 formed to have a substantially circular cross section. Thus, the axial length of the peripheral wall (outer wall) 30 formed substantially parallel to the rotary shaft 3, of the frame section 22 formed in a substantially cylindrical shape, i.e., the length F illustrated in Fig. 1B is set to a first axial length F in this embodiment.

In this embodiment, by forming the armature coil 9 in the concentrated winding manner as described above, the axial length of the armature core 8 becomes shorter than before. Also, since a decrease in the magnetic circuit volume of the yoke 5 is compensated by providing the magnet housing section 54 as an uneven thickness structure, the axial length of the yoke 5 can be shortened more than before. Also, the length of the yoke 5 including the magnet housing section 54 can be shortened, by housing the brush holder 36 in the frame section 22. That is, the axial length of the yoke 5 is shortened with no trouble. The second axial length Y is formed to be equal to or shorter than the first axial length F. Forming the second axial length Y shorter than the first axial length F is more preferable in reducing the size and weight.

Furthermore, the brush holder 36 and the commutator 10 are housed in the relatively long frame section 22, thereby eliminating the stepped shape for the housing part of the brush holder 36 from the yoke 5 including the magnet housing section 54.

Therefore, by shortening the length of the yoke 5 made of a material having the high specific gravity, and by eliminating the stepped shape for the brush holder 36 from the yoke 5, in particularly, the size and weight of motor section 2 are reduced than before.

As illustrated in Fig. 2, the gear group 41 is housed in the housing body 42. The gear group 41 includes a worm shaft 25 connected to the rotary shaft 3 of the motor section 2, a pair of stepped gears 26 and 26 meshing with the worm shaft 25, and a spur gear 27 meshing with the stepped gears 26.

The worm shaft 25 is coupled to the rotary shaft 3 at one end and is rotatably supported by the housing body 42 at the other end. A connecting section 24 between the worm shaft 25 and the rotary shaft 3, i.e., the other end of the rotary shaft 3 is rotatably supported by a rolling bearing 32 provided on the bottom wall 31 of the frame section 22 formed in the housing body 42.

Also, the worm shaft 25 has a first screw section 25a and a second screw section 25b opposite to each other. The first screw sections 25a and second screw sections 25b are formed in one or two rows. However, the first screw sections 25a and second screw sections 25b may be formed in three or more rows.

A pair of stepped gears 26 and 26 are disposed on both sides with the worm shaft 25 interposed therebetween, and each pair of the stepped gears 26 and 26 meshes with the first screw section 25a and the second screw section 25b.

The pair of stepped gears 26 and 26 are members in which a worm wheel 28 meshing with the worm shaft 25 is integrally formed with a small-diameter gear 29 formed to have a smaller diameter than the worm wheel 28.

An idler shaft 61 is press-fitted to the radial center of the stepped gear 26. The idler shaft 61protrudes to the opposite side of the small-diameter gear 29, and a protruding end portion 61a is pivotally supported on the housing body 42 in a freely rotatable manner. On the other hand, the tip of the small-diameter gear 29 present at the opposite end to the end portion 61 a of the idler shaft 61 is pivotally supported on the bottom plate 43 in a freely rotatable manner.

Both ends of the pair of stepped gears 26 are pivotally supported by the housing body 42 and the bottom plate 43. The pair of stepped gears 26 and 26 rotates in the same direction, and transmits rotation of the worm shaft 25 to a spur gear 27. That is, a so-called Marshall mechanism is configured by the worm shaft 25 and the pair of stepped gears 26, and a thrust force applied to the worm shaft 25 is canceled by the pair of stepped gears 26.

The spur gear 27 meshes with the small-diameter gear 29 of the stepped gear 26. In the radial center of the spur gear 27, a boss section 65 is formed to protrude toward the bottom plate 43 side. The boss section 65 is rotatably supported by the bottom plate 43. Also, an output shaft 62 is press-fitted to the boss section 65. The output shaft 62 protrudes from the bottom wall (end portion) 42c of the housing body 42. In the bottom wall 42c of the housing body 42, a boss section 63 is formed to protrude outward in a part corresponding to the output shaft 62. The boss section 63 is provided with a slide bearing 64 for pivotally supporting the output shaft 62 in a freely rotatable manner.

In a part of the output shaft 62 protruding from the housing body 42, a tapered section 66 is formed to gradually taper as it goes toward the tip. A serration 67 is formed in the tapered section 66. Thus, for example, it is possible to connect an external mechanism for driving a wiper or the like with the output shaft 62.

Also, a connector 68 protrudes from the side wall of the housing body 42 in the axial direction of the rotary shaft 3. The connector 68 is connected to a control device (not illustrated) and supplies electric power of an external power supply (not illustrated) to the motor section 2.

In the bottom plate 43 that closes the opening 42a of the housing body 42, a substrate 71 is disposed on an inner surface 43a. A terminal 72 for electrically connecting the connector 68 with the motor section 2 is provided in the substrate 71. Also, contactors 73a and 73b are provided in the substrate 71. The contactors 73a and 73b are sliding contacts for detecting a rotational position of the spur gear 27. A contact plate (not illustrated) is provided in a part in which the contactors 73a and 73b of the spur gear 27 come into slide-contact with each other.

Along with the rotation of the spur gear 27, i.e., the output shaft 62, the contact position between the contactor 73a and 73b and a contact plate (not illustrated) changes or they come into contact / do not come contact with each other. Thus, the rotational position of the output shaft 62 can be detected. Signals detected by the contactors 73a and 73b are output to a control device (not illustrated) via the terminal 72, and the rotation control of the motor section 2 is performed.

In the wiper motor 1 having such a configuration, the first axial length F is formed to be equal to or longer than the second axial length Y. The first axial length F is the axial length of the peripheral wall (outer wall) 30 of the frame section 22 formed substantially parallel to the rotary shaft 3, and the second axial length Y is the axial length of the outer wall of the magnet housing section 54 formed substantially parallel to the rotary shaft 3. Therefore, the brush holder 36 is housed in the relatively long frame section 22, and thus, it is possible to eliminate a stepped shape of the housing part of the brush holder 36 from the yoke 5 including the magnet housing section 54. Furthermore, it is possible to shorten the length of the yoke 5 including the magnet housing section 54, by housing the brush holder 36 in the frame section 22. Therefore, by reducing the length of the yoke 5 made of a material having the high specific gravity, and by eliminating the stepped shape for the brush holder 36 from the yoke 5, the size and weight of the motor section (electric motor) 2 can be reduced.

In addition, since the first yoke plate thickness t1 as the plate thickness of the magnet fixing section 54a in the magnet housing section 54 is formed to be thinner than the second yoke plate thickness t2 as the plate thickness of the part 54b located between the magnet fixing sections 54a and 54a adjacent to each other in the circumferential direction of the magnet housing section 54, even when the axial length of the yoke 5 is shortened, it is possible to compensate for the reduction of the magnetic circuit volume. Therefore, by shortening the axial length of the yoke 5 than before, the weight of the yoke 5 can be reduced without impairing the magnetic properties.

Since the armature coils 9 of the armature core 8 are formed in a concentrated winding manner, it is possible to shorten the axial length of the armature core 8 of this embodiment, for example, as compared to the conventional armature core in which the armature coils are formed in an overlapping winding manner. Therefore, it is possible to shorten the length of the yoke 5 including the magnet housing section 54 and to reduce the size and weight of the motor section (electric motor) 2.

Furthermore, since the size and weight are reduced as described above, it is possible to improve the vehicle mountability.

The present invention is not limited to the above-mentioned embodiment, and various modifications can be made without departing from the gist of the present invention.

For example, in the above-mentioned embodiment, by providing the outer flange section 52 in the opening 53a of the cylindrical section 53 forming the yoke 5 as illustrated in Fig. 2, and by allowing the outer flange section 52 to abut against the flange section 22a formed in the frame section 22 of the gear housing 23 and fastening them with a bolt, the yoke 5 is fastened and fixed to the deceleration mechanism 4. However, the opening 53a side of the cylindrical section 53 may be partially inserted into the frame section 22, by reducing the outer diameter of the yoke 5.

Moreover, in this embodiment, the yoke 5 and the frame section 22 are formed in a substantially cylindrical shape and have a substantially circular cross-sectional shape, but the embodiment of the present invention is not limited thereto. For example, the cross-sectional shape of the yoke 5 and the frame section 22 may be an oval shape (elliptical shape).

Furthermore, although the case of applying the electric motor of the present invention to the wiper motor has been described in this embodiment, the electric motor of the present invention is also applicable to a general motor other than the wiper motor.

### [Industrial Applicability]

According to the above-mentioned electric motor, by housing the brush holder in the frame section, it is possible to eliminate a stepped shape due to the housing section of the brush holder from the yoke including the magnet housing section. Also, by housing the brush holder in the frame section, it is possible to shorten the length of the yoke including the magnet housing section. Therefore, by shortening the length of the yoke made of a material having a high specific gravity, and by eliminating the stepped shape for the brush holder from the yoke, the size and weight of the electric motor can be reduced.

### [Reference Signs List]

- 1: Wiper motor
- 2: Motor section (electric motor)
- 3: Rotary shaft
- 4: Deceleration mechanism
- 5: York
- 6: Armature
- 7: Permanent magnet (magnet)
- 8: Armature core
- 9: Armature coil
- 21: Brush
- 22: Frame section
- 23: Gear housing
- 30: Peripheral wall (outer wall)
- 36: Brush holder
- 53: Cylindrical section
- 54: Magnet housing section
- 54a: Magnet fixing section
- 54b: Part located between magnet fixing section
- Y: First axial length
- F: Second axial length

## Claims

1. An electric motor comprising:
a yoke having a cylindrical magnet housing section that houses a magnet; and
a gear housing having a cylindrical frame section that houses at least a brush holder,
wherein one side of the yoke is joined to the other side of the frame section,
a rotary shaft is housed in the magnet housing section and the frame section in an axial direction of the magnet housing section and the frame section,
a first axial length is formed to be equal to or longer than a second axial length, the first axial length is an axial length of an outer wall of the frame section that is formed substantially parallel to the rotary shaft, and the second axial length is an axial length of an outer wall of the magnet housing section that is formed substantially parallel to the rotary shaft.

2. The electric motor according to claim 1, wherein the magnet housing section is formed to have a first yoke plate thickness thinner than a second yoke plate thickness, the first yoke plate thickness is a plate thickness of a magnet fixing section to which the magnet is fixed, and the second yoke plate thickness is a plate thickness of a part located between the magnet fixing sections in a circumferential direction of the magnet housing section.

3. The electric motor according to claim 1 or 2, further comprising:
an armature core that is attached to the rotary shaft and has a plurality of teeth radially extending in a radial direction,
wherein the armature core is formed by winding the windings around each of the plurality of teeth in a concentrated winding manner.

4. A wiper motor comprising the electric motor according to any one of claims 1 to 3.
